(19) Europäisches Patentamt
European Patent Office
Office européen des brevets

(11) **EP 4 354 365 B1**

(12) **EUROPÄISCHE PATENTSCHRIFT**

(45) Veröffentlichungstag und Bekanntmachung des Hinweises auf die Patenterteilung:
**04.03.2026   Patentblatt 2026/10**

(21) Anmeldenummer: **22201309.6**

(22) Anmeldetag: **13.10.2022**

(51) Internationale Patentklassifikation (IPC):
**G06Q 10/02** (2012.01)     **G06Q 10/06** (2023.01)

(52) Gemeinsame Patentklassifikation (CPC):
**G06Q 10/02; G06Q 10/06**

(54) **VORRICHTUNG UND VERFAHREN ZUR AUSGABE EINER AKTUELLEN WARTEZEIT IN EINER WARTESCHLANGE VON PERSONEN**

DEVICE AND METHOD FOR OUTPUTTING A CURRENT WAITING QUEUE OF PERSONS

DISPOSITIF ET PROCÉDÉ POUR DÉLIVRER UN TEMPS D'ATTENTE ACTUEL DANS UNE FILE D'ATTENTE DE PERSONNES

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(43) Veröffentlichungstag der Anmeldung:
**17.04.2024   Patentblatt 2024/16**

(73) Patentinhaber: **Qmetrix GmbH**
**1020 Wien (AT)**

(72) Erfinder: **PUNZENGRUBER, Dieter**
**1130 Wien (AT)**

(74) Vertreter: **Weiser Voith Gugler**
**Patentanwälte Partnerschaft**
**Kopfgasse 7**
**1130 Wien (AT)**

(56) Entgegenhaltungen:
**US-A1- 2014 350 976     US-A1- 2019 026 565**

**Beschreibung**

Die vorliegende Erfindung betrifft eine Vorrichtung und ein Verfahren zur Ausgabe einer aktuellen Wartezeit in einer Warteschlange von Personen.

Zur Anzeige der Wartezeit in Warteschlangen werden derzeit entweder statische Tafeln ("hier warten Sie noch 30 Minuten") oder Bildschirme mit dynamischem Inhalt ("die aktuelle Wartezeit beträgt hier 25 Minuten") im Wartebereich bzw. entlang der Warteschlange aufgestellt. Statische Anzeigetafeln können nicht den aktuellen Durchsatz der Warteschlange berücksichtigen. Dieser hängt beispielsweise davon ab, wie viele Schalter am Ende der Warteschlange für die Bedienung der Wartenden geöffnet sind, wie hoch die Verarbeitungsgeschwindigkeit solcher Schalter oder die Durchlassgeschwindigkeit von Eingängen, vor denen sich die Warteschlange aufbaut, ist usw. Dynamische Anzeigen erfordern wiederum eine aufwendige Infrastruktur vor Ort, wie kostspielige Bildschirme, geschützte Aufstellplätze hiefür, Verkabelungen für Strom und Datenverkehr usw. US 2014/350976 A1 offenbart bspw. ein elektronisches System zum Verwalten von Warteschlangen. US 2019/026565 A1 offenbart zudem ein Verfahren zum Erkennen eines Objekts beim Betreten und/oder Verlassen eines Wartebereichs.

Die Erfindung setzt sich zum Ziel, Vorrichtungen und Verfahren zur dynamischen Wartezeitinformation in einer Warteschlange zu schaffen, die wenig Infrastruktur erfordern und rasch und flexibel vor Ort einsetzbar sind.

Dieses Ziel wird in einem ersten Aspekt der Erfindung mit einer Vorrichtung der einleitend genannten Art erreicht, die sich gemäß der Erfindung auszeichnet durch:

zumindest einem in vorgegebener Entfernung vom Ausgang an der Warteschlange angeordneten Datenträger - bevorzugt zumindest zwei in unterschiedlichen Entfernungen vom Ausgang an der Warteschlange angeordnete Datenträger - mit jeweils einer eindeutigen, von einem Smart Device einer wartenden Person maschinenlesbaren Kennung;

eine Erfassungseinrichtung zum Erfassen einer aktuellen Rate an pro Zeiteinheit den Ausgang verlassenden Personen; und

eine an die Erfassungseinrichtung angeschlossene Recheneinrichtung, welche dafür ausgebildet ist, für jeden Datenträger aus seiner Entfernung vom Ausgang und der aktuellen Rate eine datenträgerortsspezifische aktuelle Wartezeit zu berechnen und unter seiner Kennung zur Ausgabe über ein Funknetz an das Smart Device bereitzustellen.

Die Erfindung ermöglicht einer in der Warteschlange wartenden Person eine dynamische Anzeige ihrer aktuellen Wartezeit auf ihrem eigenen Smart Device, z.B. Smartphone, durch Abscannen eines in ihrer Nähe befindlichen Datenträgers mit dem Smart Device. Eine aufwendige stationäre Infrastruktur in Form von verteilten Bildschirmen, deren Verkabelung und sichere Montage sind nicht erforderlich. Das Smart Device der wartenden Person kann genau ihre Wartezeit an ihrem jeweiligen Ort in der Warteschlange, wo der abgescannte Datenträger angeordnet ist, ausgeben.

Das Anbringen des bzw. der Datenträger entlang der Warteschlange ist ein überaus einfacher und kostengünstiger Vorgang. Beispielsweise können Aufkleber als Datenträger verwendet werden, die mit einer Kamera eines Smart Device optisch gelesen werden können, oder RFID- oder NFC-Tags, die mittels eines RFID- oder NFC-Readers im Smart Device über Funk ausgelesen werden können. Für erstere Variante trägt bevorzugt jeder Datenträger seine Kennung in Form eines kameralesbaren QR-Codes oder Barcodes. Moderne Smartphones sind regelmäßig bereits mit einer Kamera ausgestattet, sodass die Erfindung in breitem Umfang eingesetzt werden kann.

Bevorzugt enthält die bzw. jede Kennung auch eine Webadresse der Recheneinrichtung, so dass die datenträgerortsspezifische Wartezeit über einen einfachen Aufruf der Webadresse in einer Internetverbindung über das Funknetz abgefragt werden kann.

Vor Veranstaltungssälen, in Wartebereichen von Behörden, Kundencentern, Kassen, Märkten, auf Flughäfen usw. werden Warteschlangen häufig durch Gurtständer, Begrenzungspfosten od.dgl. begrenzt. Gemäß einer besonders bevorzugten Ausführungsform der Erfindung ist zumindest ein Datenträger an einem solchen Gurtständer oder Begrenzungspfosten für die Warteschlange angebracht. Die Installation der erfindungsgemäßen Vorrichtung vor Ort erfordert damit lediglich die Montage einer Erfassungseinrichtung am Ausgang der Warteschlange, eine entsprechend mit dieser und den Smart Devices der Wartenden verbindbare Recheneinrichtung und das Aufstellen solcher mit Datenträgern versehenen Gurtständer bzw. Begrenzungspfosten.

In mäanderförmigen Warteschlangen werden manche Gurtständer bzw. Begrenzungspfosten zwischen zwei benachbarten, entgegengesetzt durchlaufenen Abschnitten der Warteschlange eingesetzt, d.h. die Wartenden gehen beidseitig und in entgegengesetzten Richtungen an solchen Gurtständern bzw. Begrenzungspfosten vorbei. In diesem Fall ist es besonders günstig, wenn ein solcher Gurtständer bzw. Begrenzungspfosten mit zumindest zwei in unterschiedliche Richtungen weisenden Datenträgern versehen ist.

In all diesen Ausführungsformen kann die Recheneinrichtung die aktuellen Wartezeiten nicht nur zur Ausgabe über das Funknetz bereitstellen, sondern bevorzugt auch die von einem Smart Device maschinengelesene Kennung über das Funknetz empfangen und die unter dieser Kennung bereitgestellte aktuelle Wartezeit über das Funknetz an dieses Smart Device zur Ausgabe darauf senden.

Für die Berechnung der aktuellen Wartezeit am jeweiligen Aufstellungsort eines Datenträgers auf Basis der aktuellen Ausgangs-Rate der Warteschlange und der jeweiligen Ausgangsentfernung des Datenträgers kann ein Erfahrungs- bzw. Schätzwert der Anzahl an Personen, die sich über eine solche Entfernung in der Warteschlange befinden, vorgegeben werden. Wenn sich beispielsweise in der Warteschlange 1,4 Personen/m befinden und der betrachtete Datenträger 10 m vom Ausgang entfernt ist, dann befinden sich 14 Personen zwischen dem Datenträger und dem Ausgang; wenn in diesem Fall die Ausgangs-Rate der Warteschlange 1 Person/min beträgt, dann ist die Wartezeit am Ort dieses Datenträgers 14 min.

In einer optionalen Ausführungsform kann anstelle eines vorgegebenen Erfahrungs- bzw. Schätzwerts die aktuelle Personendichte in der Warteschlange gemessen und für die Berechnung der datenträgerortsspezifischen aktuellen Wartezeit herangezogen werden. Dazu weist die Vorrichtung bevorzugt eine Zähleinrichtung zum Zählen der aktuellen Anzahl an pro Entfernungseinheit in der Warteschlange befindlichen Personen auf und die Recheneinrichtung ist dafür ausgebildet, für die Berechnung der datenträgerortsspezifischen aktuellen Wartezeiten auch die gemessene aktuelle Anzahl heranzuziehen.

Die Zähleinrichtung für die Personendichte in der Warteschlange kann von jeder in der Technik bekannten Art sein, beispielsweise aufgebaut mit Lichtschranken, Trittschaltermatten, Infrarot- oder thermischen Sensoren usw. Bevorzugt ist die Zähleinrichtung eine Kamera mit Bildverarbeitungsmitteln zur Personenzählung im Bild der Kamera. Eine einzige Kamera kann beispielsweise die gesamte Warteschlange überblicken und so die gesamte Anzahl von Wartenden und/oder die (auch lokal variable) Personendichte, d.h. die Anzahl von Personen pro Entfernungseinheit, erfassen. Dadurch kann die Genauigkeit der Wartezeitausgabe verbessert werden.

Die Erfassungseinrichtung zur Erfassung der aktuellen Ausgangs-Rate der Warteschlange kann ebenfalls auf jede in der Technik bekannte Art ausgestaltet sein, beispielsweise in Form einer Kamera, optischer Sensoren, akustischer Sensoren, Trittschaltermatten usw. Bevorzugt ist die Erfassungseinrichtung ein Drehkreuz, ein Näherungssensor oder eine Lichtschranke, was eine einfache und zuverlässige Erfassung der Rate erlaubt.

In einem zweiten Aspekt schafft die Erfindung ein Verfahren zur Ausgabe einer aktuellen Wartezeit in einer Warteschlange von Personen, die einen Ausgang hat, umfassend die folgenden Schritte in beliebiger Reihenfolge, soweit sie nicht einander bedingen:

Anordnen zumindest eines Datenträgers in vorgegebener Entfernung vom Ausgang an der Warteschlange, bevorzugt zumindest zweier Datenträger in unterschiedlichen Entfernungen vom Ausgang an der Warteschlange, wobei jeder Datenträger eine eindeutige, von einem Smart Device einer wartenden Person maschinenlesbare Kennung hat; Erfassen einer aktuellen Rate an pro Zeiteinheit den Ausgang verlassenden Personen; in einer Recheneinrichtung: Berechnen, für jeden Datenträger aus seiner Entfernung vom Ausgang und der aktuellen Rate, einer datenträgerortsspezifischen aktuellen Wartezeit und Bereitstellen derselben unter seiner Kennung zur Ausgabe über ein Funknetz an das Smart Device.

Bevorzugt trägt jeder Datenträger seine Kennung in Form eines kameralesbaren QR-Codes oder Barcodes.

Optional kann das Verfahren auch die folgenden, in der Recheneinrichtung durchgeführten Schritte umfassen:

Empfangen einer von einem Smart Device maschinengelesenen Kennung über das Funknetz; und Senden der unter dieser Kennung bereitgestellten aktuellen Wartezeit über das Funknetz an dieses Smart Device zur Ausgabe darauf.

Wie erörtert kann für die Personendichte in der Warteschlange ein Erfahrungs- bzw. Schätzwert herangezogen werden. Optional kann bevorzugt eine aktuelle Anzahl an pro Entfernungseinheit in der Warteschlange befindlichen Personen gemessen und für die Berechnung der aktuellen Wartezeit herangezogen werden.

Hinsichtlich weiterer bevorzugter Merkmale und Vorteile des erfindungsgemäßen Verfahrens wird auf die obigen Ausführungen zur erfindungsgemäßen Vorrichtung verwiesen.

Die Erfindung wird nachstehend anhand von in den beigeschlossenen Zeichnungen dargestellten Ausführungsbeispielen näher erläutert. In den Zeichnungen zeigt:

Fig. 1 die Verwendung der Vorrichtung und des Verfahrens der Erfindung in einer Warteschlange von Personen in einer schematischen Perspektivansicht;
Fig. 2 die Vorrichtung der Erfindung in einer schematischen Draufsicht; und
Fig. 3 das Verfahren der Erfindung in einem Flussdiagramm.

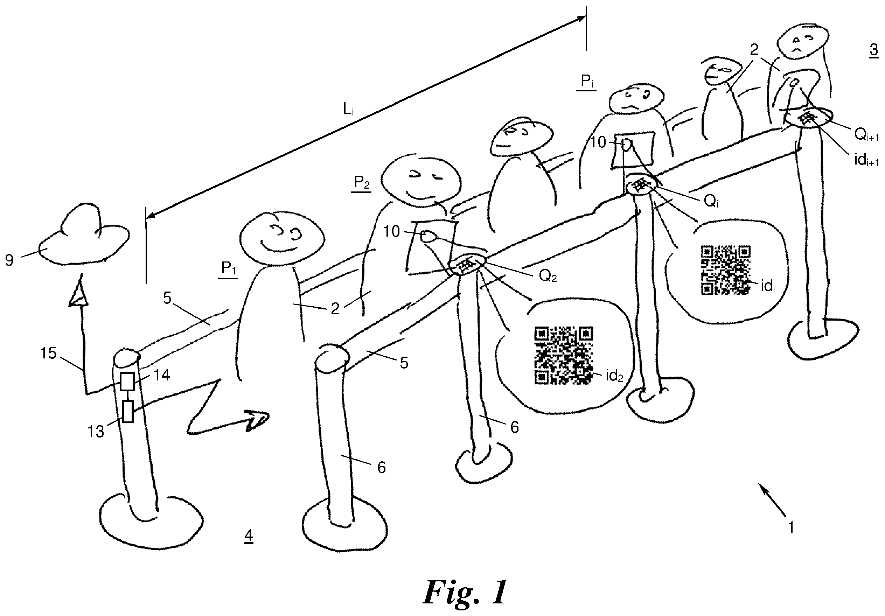

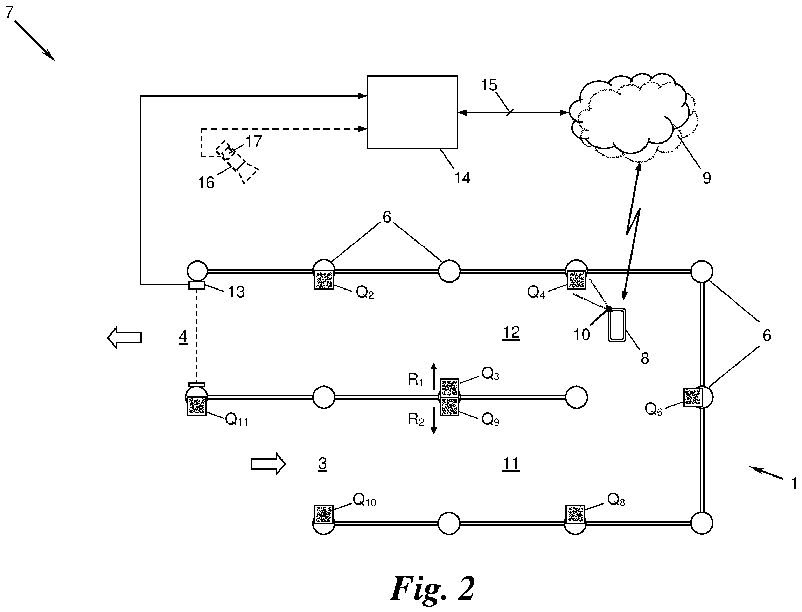

In den Fig. 1 und 2 ist eine Warteschlange 1 von wartenden Personen 2 gezeigt. Die Warteschlange 1 hat einen Eingang 3 und einen Ausgang 4, und die Personen 2 warten darin eine nach der anderen darauf, den Ausgang 4 verlassen zu dürfen ("first in - first out", FIFO-Prinzip). Beispielsweise befindet sich die Warteschlange 1 vor einem oder mehreren Eingängen einer Veranstaltungshalle, vor einem oder mehreren Schaltern einer Behörde oder eines Kundenbüros, in einer Abfertigungshalle eines Flughafens, z.B. vor einem Flughafengate, vor Kassen in einem Supermarkt, an einer Haltestelle für öffentliche Verkehrsmittel wie Taxis, Busse, Straßenbahnen, Züge, usw.

Es versteht sich, dass in der Warteschlange 1 auch mehrere Personen 2 nebeneinander stehen könnten, und dass auch mehrere Personen 2 den Ausgang 4 gleichzeitig bzw. parallel oder in Gruppen verlassen könnten; all dies ist von den Begriffen "Warteschlange" und "FIFO-Prinzip" hier mitumfasst.

Die Warteschlange 1 kann linear wie in Fig. 1 oder gekrümmt oder mäanderförmig wie in Fig. 2 vom Eingang 3 zum Ausgang 4 verlaufen. Die Warteschlange 1 kann sich "frei" bilden, d.h. die Personen 2 warten diszipliniert ohne seitliche Begrenzungen einfach hintereinander, oder sie wird durch Mauern, Wänden, Geländer, Brüstungen, Seile oder wie in dem Beispiel der Fig. 1 und 2 durch Gurtbänder 5 seitlich begrenzt, die zwischen stationären oder transportablen Gurtständern 6 gespannt sind. Die Gurtbänder 5 können abschnittsweise an den Gurtständern 6 aufrollbar gelagert und jeweils an einem benachbarten Gurtständer 6 lösbar verankert sein, wie beispielsweise in der EP 2 937 463 B1 beschrieben, deren Offenbarung hier durch Bezugnahme aufgenommen wird.

In der Warteschlange 1 befinden sich N Personen 2 über eine Länge L. Die Personendichte, also die pro Entfernungseinheit (z.B. Meter) in der Warteschlange 1 befindliche Anzahl an Personen 2, beträgt somit N / L. Erfahrungswerte für die Personendichte D in üblichen Warteschlangen vor z.B. Flughafengates sind 0,5 - 10 Personen/m, insbesondere 1 - 2 Personen/m, z.B. 1,4 Personen/m.

Die aktuelle Rate SR an Personen 2, welche den Ausgang 4 der Warteschlange 1 pro Zeiteinheit (z.B. Sekunde, Minute oder Stunde) verlassen, auch Ausgang-Rate oder "Service Rate" der Warteschlange 1 genannt, hängt in der Regel von der Bedienungs-, Verarbeitungs- bzw. Durchlassgeschwindigkeit jener Einrichtungen ab, vor denen sich die Warteschlange 1 aufbaut, z.B. der Personendurchsatzrate der Eingänge einer Veranstaltungshalle, der Servicierungsrate von Kunden an Schaltern, der Kontrollrate von Personen an einem Gate, und dabei insbesondere auch von der Anzahl an parallelen solchen Einrichtungen nach der Warteschlange 1, z.B. der Anzahl an geöffneten Schaltern, Eingängen usw.

Die Wartezeit $WT_i$ einer bestimmten Person 2 an einem Ort $P_i$ (i = 1, 2, ...) der Warteschlange 1, der sich in einer Entfernung $L_i$ vom Ausgang 4 befindet, beträgt

$$WT_i \; = \; N_i \; / \; SR \hspace{5cm} (1)$$

mit

$N_i$ ... Anzahl an Personen 2, die sich über die Entfernung $L_i$ in der Warteschlange 1 befinden, wobei

$$N_i \; = \; L_i \; * \; D_i \hspace{5cm} (2)$$

ist, mit

$D_i$ ... mittlere Personendichte über die Entfernung $L_i$ (Beispiel: 1,4 Personen/m).

Ist der Ort $P_i$ beispielsweise 10 m vom Ausgang 4 entfernt, befinden sich 14 = 10 m * 1,4/m Personen 2 in der Warteschlange 1 zwischen dem Ort $P_i$ und dem Ausgang 4; und ist die aktuelle Servicerate SR 1 Person/min, dann beträgt die aktuelle Wartezeit $WT_i$ einer Person 2 am Ort $P_i$ 14 / (1/min) = 14 min.

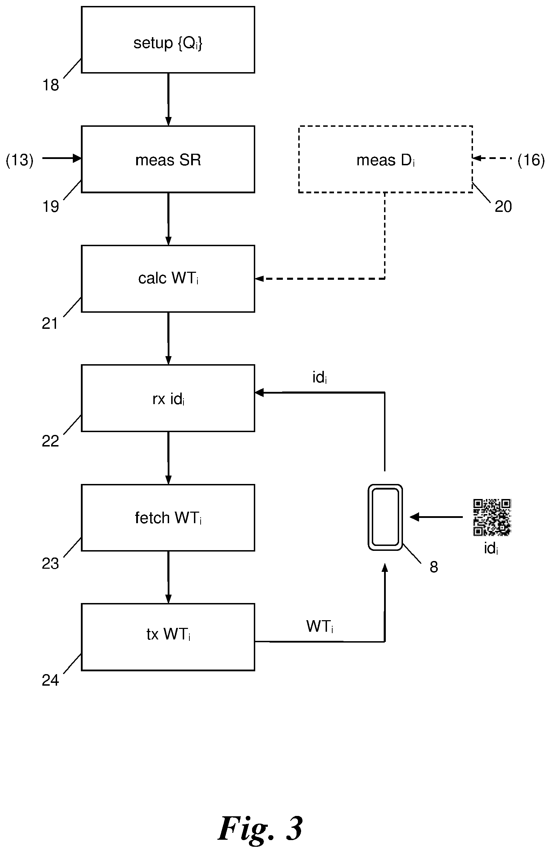

Um den Personen 2 in der Warteschlange 1 die Möglichkeit zu geben, ihre jeweils aktuelle Wartezeit $WT_i$ an einem bestimmten Ort $P_i$ in der Warteschlange 1 zu erfahren, sei es um ihre Ungeduld zu besänftigen oder damit sie sich auf das Verlassen der Warteschlange 1 vorbereiten zu können, dienen die im Folgenden beschriebene Vorrichtung 7 und das anschließend anhand von Fig. 3 beschriebene Verfahren.

Die Vorrichtung 7 arbeitet mit Smart Devices 8, welche von den Personen 2 mitgeführt werden, zusammen, und zwar über ein Funknetz 9 vom Kurzreichweiten-, zellularen oder Langstreckentyp, z.B. ein WLAN-, Bluetooth-, NFC- oder RFID-Netz oder insbesondere ein zellulares Datennetz nach einem der Mobilfunkstandards 3G, 4G, 5G, 6G od.dgl. Die Smart Devices 8 sind demgemäß entsprechende Endgeräte, die mit solchen Funknetzen 9 kommunizieren können, z.B. entsprechende Mobiltelefone, Smartphones, Smartwatches, Smartglasses, z.B. auch für Augmented Reality (AR), aber auch jede andere Art von "Wearables" wie digitale Fitnessarmbänder, digitaler Schmuck, Smart Implants usw.

Die Smart Devices 8 sind jeweils mit einem Lesegerät 10 für maschinenlesbare Datenträger $Q_i$ ausgestattet, genauer zum Lesen einer auf einem solchen Datenträger $Q_i$ gespeicherten Kennung $id_i$. Jeder Datenträger $Q_i$ hat eine eigene, im Rahmen der Vorrichtung 7 eindeutige Kennung $id_i$.

Bei den Datenträger $Q_i$ kann es sich um jede in der Technik bekannte Art von maschinenlesbaren Datenträgern handeln, die mittels Kontakts oder bevorzugt kontaktlos vom Lesegerät 10 eines Smart Device 8 maschinengelesen werden können. Beispiele von Datenträgern $Q_i$ sind Tafeln, Schildchen, Beschriftungen, Gravuren, Klebeetiketten usw. mit optisch lesbaren Kennungen $id_i$. Die dazu passenden Lesegeräte 10 der Smart Devices 8 sind optische Kameras, wie beispielsweise die heutzutage ubiquitären Kameras von Smartphones, die als Smart Devices 8 verwendet werden. Oder die Datenträger $Q_i$ sind über Funk auslesbar, z.B. RFID- oder NFC-Tags oder -Etiketten, welche von dazu passenden, in den Smart Devices 8 eingebauten RFID- oder NFC-Lesegeräten 10 hinsichtlich ihrer jeweiligen darin gespeicherten Kennung $id_i$ ausgelesen werden können. Auch jede andere Form von maschineller Auslesung einer auf einem Datenträger $Q_i$ gespeicherten Kennung $id_i$ ist vorstellbar, z.B. auf akustischem Wege, wenn der Datenträger $Q_i$ eine akustische Bake und das Lesegerät 10 ein Mikrofon ist, od.dgl.

Die Vorrichtung 7 umfasst zumindest zwei an unterschiedlichen Positionen $P_i$, d.h. in unterschiedlichen Entfernungen $L_i$ vom Ausgang 4, an der Warteschlange 1 angeordnete Datenträger $Q_i$. In dem in den Fig. 1 und 2 gezeigten Beispiel sind die Datenträger $Q_i$ am oberen Ende der Gurtständer 6 angebracht. Wenn bei einem mäanderförmigen Verlauf der Warteschlange 1 - wie in Fig. 2 gezeigt - ein Gurtständer 6 zwei benachbarte, gegenläufige Abschnitte 11, 12 der Warteschlange 1 abtrennt, können an einem Gurtständer 6 auch (zumindest) zwei in unterschiedliche Richtungen $R_1$, $R_2$ weisende Datenträger $Q_i$ angebracht sein, von denen also der eine zum Abschnitt 11 und der andere zum Abschnitt 12 und damit zu unterschiedlichen Positionen $P_i$ in der Warteschlange 1 weist.

Es versteht sich, dass die Datenträger $Q_i$ auch in anderer Form entlang der Warteschlange 1 montiert werden können, z.B. an Begrenzungspfosten, Geländern, Brüstungen, Mobiliar, Wänden, am Boden, an der Decke oder an Überkopf-Tragstrukturen.

Die auf dem jeweiligen Datenträger $Q_i$ gespeicherte, von diesem zur Maschinenlesung dargebotene Kennung $id_i$ codiert jeweils zumindest die Entfernung $L_i$ dieses Datenträgers $Q_i$ vom Ausgang 4. Im einfachsten Fall gibt die Kennung $id_i$ direkt die Entfernung $L_i$ des Datenträgers $Q_i$ an, z.B. $id_4$ = "4 m". Die Kennung $id_i$ kann jedoch die Entfernung $L_i$ auch indirekt, z.B. in der Form "dritten Gurtständer vor dem Ausgang", angeben, wenn die Aufstellorte bzw. Entfernungen $L_i$ der einzelnen Datenträgern $Q_i$ vorgegeben bzw. vorbekannt und in einem Speicher der Vorrichtung 7 hinterlegt sind.

Optional kann die Kennung $id_i$ zusätzlich eine Webadresse der Recheneinheit 14 im Internet kodieren, unter der die Wartezeit $WT_2$ am Ort $P_2$ des jeweiligen Datenträgers $Q_i$ über das Funknetz 9 abgefragt werden kann.

In dem in Fig. 1 gezeigten Beispiel ist die als QR-Code ausgeführte Kennung $id_2$ des am zweiten Gurtständer 6 vor dem Ausgang 4 angebrachten Datenträgers $Q_2$:

$id_2$ = https://qmetrix.com\wt?loc=VIE&qu=7&st=2

und identifiziert damit den zweiten Gurtständer (stanchion = 2) in der siebten Warteschlange (queue = 7) am Installationsort "Vienna International Airport" (loc = VIE) sowie die Webadresse "qmetrix.com" der Recheneinrichtung 14.

Die Kennung $id_i$ des am dritten Gurtständer 6 vor dem Ausgang 4 angebrachten Datenträgers $Q_i$ ist:

$id_i$ = https://qmetrix.com\wt?loc=VIE&qu=7&st=3

und identifiziert somit am Ort VIE in der Warteschlange Nr. 7 den Gurtständer Nr. 3.

Zusätzlich zu den Datenträgern $Q_i$ umfasst die Vorrichtung 7 eine Erfassungseinrichtung 13 zum Erfassen der aktuellen Ausgangs-Rate SR der Warteschlange 1.

Die Erfassungseinrichtung 13 kann beispielsweise einfach die Anzahl an verfügbaren Schaltern, Durchgängen oder Verkehrsmitteln usw. nach dem Ausgang 4 erfassen. Die Erfassungseinrichtung 13 kann dazu mit solchen Schalter-, Durchgangs- bzw. Verkehrssystemen auch elektronisch verbunden oder sogar Teil derselben sein, z.B. Teil eines elektronischen Aufrufsystems, mit dem Schalterpersonal die Wartenden zum Verlassen der Warteschlange 1 aufruft und das deshalb selbst die Ausgangs-Rate SR erfasst, oder Teil eines elektronischen Verkehrssteuerungssystems, welches die verfügbaren Verkehrsmittel steuert oder detektiert und so die Ausgangs-Rate SR erfasst.

Die Erfassungseinrichtung 13 kann aber auch am Ausgang 4 der Warteschlange 1 angeordnet sein und dort direkt die aktuelle Ausgangs-Rate SR der Warteschlange 1 messen. Die Erfassungseinrichtung 13 kann dazu beispielsweise eine Lichtschranke, ein Drehkreuz, ein Näherungssensor, eine Kamera, eine Trittschaltermatte oder jede andere Form von Einrichtung sein, welche die Anzahl an den Ausgang 4 pro Zeiteinheit verlassenden Personen 2 messen kann.

An die Erfassungseinrichtung 13 ist eine Recheneinrichtung 14 angeschlossen. Die Recheneinrichtung 14 steht über eine Schnittstelle 15 mit dem Funknetz 9 in Verbindung und kann über dieses mit den Smart Devices 8 kommunizieren. Ein Smart Device 8 kann so über das Funknetz 9 und die Schnittstelle 15 Daten von der Recheneinrichtung 14 erhalten ("push") oder abfragen ("pull"). Die Schnittstelle 15 kann eine beliebige Datenverbindung zwischen der Recheneinheit 14 und dem Funknetz 9 sein, z.B. eine Datenverbindung über das Internet.

Die Recheneinrichtung 14 berechnet für jeden Datenträger $Q_i$, genauer für dessen (ungefähren) Ort $P_i$ in der Warteschlange 1 bzw. dessen (ungefähre) Entfernung $L_i$ vom Ausgang 4 der Warteschlange 1, die jeweils (ungefähre) aktuelle datenträgerortsspezifische Wartezeit $WT_i$, u.zw. abhängig von der von der Erfassungseinrichtung 13 (zumindest annähernd) aktuell erfassten Ausgangs-Rate SR gemäß den obigen Gleichungen (1) und (2) zu

$$WT_i = (L_i * D_i) / SR.$$

Die dabei verwendete Personendichte $D_i$ zwischen dem jeweiligen Datenträger $Q_i$ und dem Ausgang 4 kann ein Erfahrungs- bzw. Schätzwert und vorgegeben sein, wie 1 - 10 Personen/m, z.B. 1,4 Personen/m usw. Optional kann die Personendichte $D_i$ mithilfe einer an die Recheneinrichtung 14 angeschlossenen Zähleinrichtung 16 jeweils aktuell gemessen werden.

Die Zähleinrichtung 16 kann von jeder in der Technik bekannten Art sein, beispielsweise eine Reihe von Trittschaltermatten am Boden der Warteschlange 1, eine Reihe von Näherungssensoren oder Lichtschranken oder - wie gezeigt - eine Kamera mit Bildverarbeitungsmitteln 17 zur Personenzählung im Kamerabild, wenn die Kamera auf die Warteschlange 1 gerichtet ist.

Die Zähleinrichtung 16 kann optional für jeden Datenträger $Q_i$, d.h. für jede Entfernung $L_i$, eine individuelle Personendichte $D_i$ bzw. individuelle Anzahl an Personen 2, die sich über die Entfernung $L_i$ der Warteschlange 1 zwischen dem jeweiligen Datenträger $Q_i$ und dem Ausgang 4 befinden, messen. Dadurch können auch Staus in der Warteschlange 1, die zu lokalen Dehnungen und Stauchungen in der Warteschlange 1 führen, berücksichtigt werden.

Die von der Vorrichtung 7 berechneten und bereitgestellten aktuellen Wartezeiten $WT_i$ können nun von den Personen 2 jeweils mit deren Smart Device 8 abgefragt und auf diesem zur Ausgabe gebracht werden. Dazu liest eine Person 2 die Kennung $id_i$ des jeweils ihr nächstgelegenen Datenträgers $Q_i$ mit dem Lesegerät 10 ihres Smart Device 8, und dieses sendet die gelesene Kennung $id_i$ über das Funknetz 9 an die Recheneinrichtung 14. Die Recheneinrichtung 14 gibt daraufhin die unter der Kennung $id_i$ bereitgehaltene, d.h. für den Datenträger $Q_i$ berechnete aktuelle Wartezeit $WT_i$ über das Funknetz 9 an das abfragende Smart Device 8 zurück. Die an einer bestimmten Position $P_i$ in der Warteschlange 1 wartende Person 2 braucht somit nur den nächstbesten Datenträger $Q_i$ mit ihrem Smart Device 8 abscannen und erhält unmittelbar darauf von der Recheneinrichtung 14 ihre aktuelle, serviceratenabhängige Wartezeit $WT_i$ am Ort $P_i$.

Die Recheneinrichtung 14 kann die datenträgerortsspezifischen Wartezeiten $WT_i$ "auf Vorrat" berechnen und für abfragende Smart Devices 8 bereithalten, auch periodisch aktualisiert entsprechenden jeweils aktuellen Erfassungen der Erfassungseinrichtung 13 und optional der Zähleinrichtung 14. Das Bereithalten von - in der Zeitgranularität der Erfassungsperiodizität der Erfassungseinrichtung 13 bzw. Zähleinrichtung 14 - aktuell vorberechneten Wartezeiten $WT_i$ spart Rechenressourcen in der Recheneinrichtung 14, wenn mit einer großen Anzahl an abfragenden Smart Devices 8 zu rechnen ist. Alternativ könnte die Recheneinrichtung 14 aber auch die jeweiligen Wartezeiten $WT_i$ erst auf Abfrage durch ein Smart Device 8 hin berechnen; optional können dazu auch erst die entsprechende Erfassungen der Erfassungseinrichtung 13 und/oder Zähleinrichtung 14 veranlasst werden, um die Aktualität der Wartezeitberechnung zu verbessern.

Fig. 3 zeigt verschiedene Ausführungsformen des von der Vorrichtung 7 - im Zusammenspiel mit einem beispielhaften Smart Device 8 und dem Funknetz 9 - ausgeführten Verfahrens. In einem ersten Schritt 18 werden die Datenträger $Q_i$ in unterschiedlichen Entfernungen $L_i$ vom Ausgang 4 angeordnet, z.B. auf Begrenzungsgeländern, -pfosten, Gurtständern 6, Wänden, Böden, Decken usw. entlang der Warteschlange 1 verteilt. Im gezeigten Beispiel trägt jeder Datenträger $Q_i$ seine Kennung $id_i$ in Form eines kameralesbaren QR-Codes oder Barcodes.

Im Schritt 19 wird die Ausgangs-Rate SR der Warteschlange 1 von der Erfassungseinrichtung 13 erfasst. In einem optionalen Schritt 20 kann auch die Personendichte D bzw. die zwischen Datenträgern $Q_i$ und Ausgang 4 auftretende Personendichte $D_i$ mittels der Zähleinrichtung 16 gemessen werden.

Auf Grundlage der erfassten Rate SR und der optional gemessenen Personendichte D bzw. $D_i$ kann nun im Schritt 21 die Recheneinrichtung 14 für (zumindest) einen bestimmten Datenträger $Q_i$ oder für jeden Datenträger $Q_i$ der Menge aller Datenträger $\{Q_i\}$ die jeweilige datenträgerortsspezifische aktuelle Wartezeit $WT_i$ berechnen wie oben erläutert. Die berechnete(n) Wartezeit(en) $WT_i$ steht/stehen nun in der Vorrichtung 7, z.B. in einem Speicher der Recheneinrichtung 14, zur Ausgabe über das Funknetz 9 an ein Smart Device 8 bereit, sei es zur Abfrage ("pull") durch das Smart Device 8 oder zur unmittelbaren Versendung an dieses ("push").

Im "pull-Fall" empfängt die Recheneinrichtung 14 in einem Schritt 22 die von einem Smart Device 8 maschinengelesene Kennung $id_i$ eines Datenträgers $Q_i$, sucht in einem Schritt 23 die für diese Kennung $id_i$ berechnete Wartezeit $WT_i$ aus ihrem Speicher heraus und versendet sie in einem Schritt 24 über das Funknetz 9 an das abfragende Smart Device 8. Im "push"-Fall könnten die Schritte 22 und 23 entfallen und die berechnete(n) Wartezeit(en) $WT_i$ an mit der Vorrichtung 7 über das Funknetz 9 verbundene ("eingeloggte") Smart Devices 8 direkt versandt werden (Schritt 24).

Die Reihenfolge der Schritte 19 - 24 kann für andere Ausführungsformen verändert werden und einzelne Schritte können auch entfallen. Wenn beispielsweise die Wartezeiten $WT_i$ nicht vorberechnet sondern erst auf Abfrage durch ein Smart Device 8 berechnet werden, dann könnte Schritt 21 nach Schritt 22 stattfinden und optional Schritt 23 entfallen. In einer anderen Ausführungsform könnten der Erfassungsschritt 19 und der optionale Zählschritt 20 auch erst nach dem Abfrageschritt 22 stattfinden, gefolgt von dem Berechnungsschritt 21, und Schritt 23 dann wieder optional entfallen.

Ferner versteht es sich, dass die Erfassungs- und Zählschritte 19, 20 fortlaufend oder periodisch wiederholt werden können, insbesondere wenn die Wartezeiten $WT_i$ im Schritt 21 vorberechnet und für die Schritte 22 - 24 in der Vorrichtung 7 bereitgehalten werden. Beispielsweise könnten dann die Schritte 19 - 21 periodisch in einer Schleife wiederholt werden, während die Abfrage- und Versendeschritte 22 - 24 als paralleler Prozess, der jeweils auf den aktuellen Stand der Schleife 19 - 21 zugreift, ausgeführt werden.

Die Recheneinrichtung 14 kann mit der Erfassungseinrichtung 13 und der optionalen Zähleinrichtung 16 vor Ort verbunden sein, beispielsweise direkt in die Erfassungseinrichtung 14 am Ausgang 4 der Warteschlange 1 integriert. Alternativ ist die Recheneinrichtung 14 örtlich von den Erfassungs- und/oder Zähleinrichtungen 13, 16 getrennt und mit diesen über eine Datenverbindung, z.B. das Internet, verbunden. Beispielsweise ist die Recheneinrichtung 14 ein Webserver, der über eine Internetverbindung mit der Erfassungseinrichtung 13 (und optional der Zähleinrichtung 16) sowie über eine weitere Internetverbindung als Schnittstelle 15 und das Mobilfunknetz 9 mit den Smart Devices 8 in Verbindung treten kann.

Die Erfindung ist nicht auf die dargestellten Ausführungsformen beschränkt, sondern umfasst alle Varianten, Modifikationen und Kombinationen von Ausführungsformen, die in den Rahmen der angeschlossenen Ansprüche fallen.

**Patentansprüche**

1. Vorrichtung zur Ausgabe einer aktuellen Wartezeit in einer Warteschlange von Personen, die einen Ausgang hat, **gekennzeichnet durch**:

   zumindest einen in vorgegebener Entfernung ($L_i$) vom Ausgang (4) an der Warteschlange (1) angeordneten Datenträger ($Q_i$) mit einer eindeutigen, von einem Smart Device (8) einer wartenden Person (2) maschinenlesbaren Kennung ($id_i$);
   eine Erfassungseinrichtung (13) zum Erfassen einer aktuellen Rate (SR) an pro Zeiteinheit den Ausgang (4) verlassenden Personen (2); und
   eine an die Erfassungseinrichtung (13) angeschlossene Recheneinrichtung (14), welche dafür ausgebildet ist, für den Datenträger ($Q_i$) aus seiner Entfernung ($L_i$) vom Ausgang (4) und der aktuellen Rate (SR) eine datenträgerortsspezifische aktuelle Wartezeit ($WT_i$) zu berechnen und unter seiner Kennung ($id_i$) zur Ausgabe über ein Funknetz (9) an das Smart Device (8) bereitzustellen.

2. Vorrichtung nach Anspruch 1, **gekennzeichnet durch** zumindest zwei in unterschiedlichen Entfernungen ($L_i$) vom Ausgang (4) an der Warteschlange (1) angeordnete Datenträger ($Q_i$) mit jeweils einer eindeutigen Kennung ($id_i$), wobei die Erfassungseinrichtung (13) dafür ausgebildet ist, für jeden Datenträger ($Q_i$) aus seiner Entfernung ($L_i$) vom Ausgang (4) und der aktuellen Rate (SR) eine datenträgerortsspezifische aktuelle Wartezeit ($WT_i$) zu berechnen und unter seiner Kennung ($id_i$) zur Ausgabe über ein Funknetz (9) an das Smart Device (8) bereitzustellen.

3. Vorrichtung nach Anspruch 1 oder 2, **dadurch gekennzeichnet, dass** jeder Datenträger ($Q_i$) seine Kennung ($id_i$) in Form eines kameralesbaren QR-Codes oder Barcodes trägt.

4. Vorrichtung nach einem der Ansprüche 1 bis 3, **dadurch gekennzeichnet, dass** jede Kennung ($id_i$) eine Webadresse der Recheneinrichtung (14) enthält.

5. Vorrichtung nach einem der Ansprüche 1 bis 4, **dadurch gekennzeichnet, dass** zumindest ein Datenträger ($Q_i$) an einem Gurtständer (6) oder Begrenzungspfosten für die Warteschlange (1) angebracht ist.

6. Vorrichtung nach Anspruch 5, **dadurch gekennzeichnet, dass** zumindest ein Gurtständer (6) bzw. Begrenzungspfosten mit zumindest zwei in unterschiedliche Richtungen ($R_1$, $R_2$) weisenden Datenträgern ($Q_i$) versehen ist.

7. Vorrichtung nach einem der Ansprüche 1 bis 6, **dadurch gekennzeichnet, dass** die Recheneinrichtung (14) dafür ausgebildet ist, die von einem Smart Device (8) maschinengelesene Kennung ($id_i$) über das Funknetz (9) zu empfangen und die unter dieser Kennung bereitgestellte aktuelle Wartezeit ($WT_i$) über das Funknetz (9) an dieses Smart Device (8) zur Ausgabe darauf zu senden.

8. Vorrichtung nach einem der Ansprüche 1 bis 7, **gekennzeichnet durch** eine Zähleinrichtung (16) zum Zählen einer aktuellen Anzahl ($D_i$) an pro Entfernungseinheit in der Warteschlange (1) befindlichen Personen (2), wobei die Recheneinrichtung (14) dafür ausgebildet ist, für die Berechnung der datenträgerortsspezifischen aktuellen Wartezeiten ($WT_i$) auch die gemessene aktuelle Anzahl ($D_i$) heranzuziehen.

9. Vorrichtung nach einem der Ansprüche 1 bis 8, **dadurch gekennzeichnet, dass** die Erfassungseinrichtung (13) ein Drehkreuz, ein Näherungssensor oder eine Lichtschranke ist.

10. Verfahren zur Ausgabe einer aktuellen Wartezeit in einer Warteschlange von Personen, die einen Ausgang hat, umfassend die folgenden Schritte in beliebiger Reihenfolge, soweit sie nicht einander bedingen:

    Anordnen zumindest eines Datenträgers ($Q_i$) in vorgegebener Entfernung ($L_i$) vom Ausgang (4) an der Warteschlange (1), wobei der Datenträger ($Q_i$) eine eindeutige, von einem Smart Device (8) einer wartenden Person (2)

maschinenlesbare Kennung ($id_i$) hat;

Erfassen einer aktuellen Rate (SR) an pro Zeiteinheit den Ausgang (4) verlassenden Personen (2);

in einer Recheneinrichtung (14): Berechnen, für den Datenträger ($Q_i$) aus seiner Entfernung ($L_i$) vom Ausgang (4) und der aktuellen Rate (SR), einer datenträgerortsspezifischen aktuellen Wartezeit ($WT_i$) und Bereitstellen derselben unter seiner Kennung ($id_i$) zur Ausgabe über ein Funknetz (9) an das Smart Device (8).

11. Verfahren nach Anspruch 10, umfassend:

Anordnen zumindest zweier Datenträger ($Q_i$) in unterschiedlichen Entfernungen ($L_i$) vom Ausgang (4) an der Warteschlange (1), wobei jeder Datenträger ($Q_i$) eine eindeutige Kennung ($id_i$) hat;

in der Recheneinrichtung (14): Berechnen, für jeden Datenträger ($Q_i$) aus seiner Entfernung ($L_i$) vom Ausgang (4) und der aktuellen Rate (SR), einer datenträgerortsspezifischen aktuellen Wartezeit ($WT_i$) und Bereitstellen derselben unter seiner Kennung ($id_i$) zur Ausgabe über ein Funknetz (9) an das Smart Device (8).

12. Verfahren nach Anspruch 10 oder 11, **dadurch gekennzeichnet, dass** jeder Datenträger ($Q_i$) seine Kennung ($id_i$) in Form eines kameralesbaren QR-Codes oder Barcodes trägt.

13. Verfahren nach einem der Ansprüche 10 bis 12, **dadurch gekennzeichnet, dass** jede Kennung ($id_i$) eine Web-adresse der Recheneinrichtung (14) enthält.

14. Verfahren nachnach einem der Ansprüche 10 bis 13, ferner umfassend, in der Recheneinrichtung (14):

Empfangen einer von einem Smart Device (8) maschinengelesenen Kennung ($id_i$) über das Funknetz (9); und

Senden der unter dieser Kennung ($id_i$) bereitgestellten aktuellen Wartezeit ($WT_i$) über das Funknetz (9) an dieses Smart Device (8) zur Ausgabe darauf.

15. Verfahren nach einem der Ansprüche 10 bis 14, **dadurch gekennzeichnet, dass** eine aktuelle Anzahl ($D_i$) an pro Entfernungseinheit in der Warteschlange (1) befindlichen Personen (2) gemessen und für die Berechnung der aktuellen Wartezeit ($WT_i$) herangezogen wird.

**Claims**

1. A device for outputting a current waiting time in a queue of persons which has an exit, **characterised by**:

at least one data carrier ($Q_i$) which is arranged at a predetermined distance ($L_i$) from the exit (4) at the queue (1) and which has a unique identifier ($id_i$) machine-readable by a smart device (8) of a waiting person (2);

a detection equipment (13) for detecting a current rate (SR) of persons (2) leaving the exit (4) per unit of time; and

a computing equipment (14) which is connected to the detection equipment (13) and is configured to calculate, for the data carrier ($Q_i$), a data carrier location-specific current waiting time ($WT_i$) based on its distance ($L_i$) from the exit (4) and the current rate (SR), and to provide it under its identifier ($id_i$) for output via a radio network (9) to the smart device (8).

2. The device according to claim 1, **characterised by** at least two data carriers ($Q_i$), which are arranged at different distances ($L_i$) from the exit (4) at the queue (1) and which each have a unique identifier ($id_i$), wherein the detection equipment (13) is configured to calculate a data carrier location-specific current waiting time ($WT_i$) for each data carrier ($Q_i$) from its distance ($L_i$) from the exit (4) and the current rate (SR), and to provide it under its identifier ($id_i$) for output via a radio network (9) to the smart device (8).

3. The device according to claim 1 or 2, **characterised in that** each data carrier ($Q_i$) carries its identifier ($id_i$) in the form of a camera-readable QR code or barcode.

4. The device according to any one of claims 1 to 3, **characterised in that** each identifier ($id_i$) contains a web address of the computing equipment (14).

5. The device according to any one of claims 1 to 4, **characterised in that** at least one data carrier ($Q_i$) is attached to a belt stand (6) or boundary post for the queue (1).

6. The device according to claim 5, **characterised in that** at least one belt stand (6) or boundary post, respectively, is provided with at least two data carriers ($Q_i$) pointing in different directions ($R_1$, $R_2$).

7. The device according to any one of claims 1 to 6, **characterised in that** the computing equipment (14) is configured to receive the identification ($id_i$) machine-read by a smart device (8) via the radio network (9) and to send the current waiting time ($WT_i$) provided under this identifier via the radio network (9) to this smart device (8) for output thereon.

8. The device according to any one of claims 1 to 7, **characterised by** a counting equipment (16) for counting a current number ($D_i$) of persons (2) in the queue (1) per distance unit, wherein the computing equipment (14) is configured, for calculating the data carrier location-specific current waiting times ($WT_i$), to also use the measured current number ($D_i$).

9. The device according to any one of claims 1 to 8, **characterised in that** the detection equipment (13) is a turnstile, a proximity sensor or a light barrier.

10. A method for outputting the current waiting time in a queue of persons which has an exit, comprising the following steps in any order, provided that they are not mutually dependent:

   arranging at least one data carrier ($Q_i$) at a predetermined distance ($L_i$) from the exit (4) at the queue (1), wherein the data carrier ($Q_i$) has a unique identifier ($id_i$) machine-readable by a smart device (8) of a waiting person (2);
   detecting a current rate (SR) of persons (2) leaving the exit (4) per unit of time;
   in a computing equipment (14): calculating, for the data carrier ($Q_i$), a data carrier location-specific current waiting time ($WT_i$) based on its distance ($L_i$) from the exit (4) and the current rate (SR), and providing the same under its identifier ($id_i$) for output via a radio network (9) to the smart device (8).

11. The method according to claim 10, comprising:

   arranging at least two data carriers ($Q_i$) at different distances ($L_i$) from the output (4) at the queue (1), wherein each data carrier ($Q_i$) has a unique identifier ($id_i$);
   in the computing equipment (14): calculating, for each data carrier ($Q_i$), a data carrier location-specific current waiting time ($WT_i$) based on its distance ($L_i$) from the output (4) and the current rate (SR), and providing the same under its identifier ($id_i$) for output via a radio network (9) to the smart device (8).

12. The method according to claim 10 or 11, **characterised in that** each data carrier ($Q_i$) carries its identifier ($id_i$) in the form of a camera-readable QR code or barcode.

13. The method according to any one of claims 10 to 12, **characterised in that** each identifier ($id_i$) contains a web address of the computing equipment (14).

14. The method according to any one of claims 10 to 13, further comprising, in the computing equipment (14):

   receiving via the radio network (9) an identifier ($id_i$) machine-read by a smart device (8) ; and
   sending the current waiting time ($WT_i$) provided under this identifier ($id_i$) via the radio network (9) to this smart device (8) for output thereon.

15. The method according to any one of claims 10 to 14, **characterised in that** a current number ($D_i$) of persons (2) in the queue (1) per distance unit is measured and used to calculate the current waiting time ($WT_i$).

**Revendications**

1. Dispositif pour délivrer un temps d'attente actuel dans une file d'attente de personnes qui possède une sortie, **caractérisé par** :

   au moins un support de données ($Q_i$), qui est disposé à une distance ($L_i$) prédéterminée de la sortie (4) sur la file d'attente (1), et qui a un identifiant ($id_i$) unique lisible par machine par un dispositif intelligent (8) d'une personne (2) en attente ;
   un équipement de détection (13) permettant la détection d'un taux (SR) actuel de personnes (2) quittant la sortie (4) par unité de temps ; et
un équipement de calcul (14), qui est connecté a l'équipement de détection (13) et qui est conçu pour calculer, pour le support de données $(Q_i)$, à partir de sa distance $(L_i)$ de la sortie (4) et du taux (SR) actuel, un temps d'attente $(WT_i)$ actuel spécifique de l'emplacement du support de données et le mettre à disposition sous son identifiant $(id_i)$ pour la délivrance par le biais d'un réseau radio (9) au dispositif intelligent (8).

2. Dispositif selon la revendication 1, **caractérisé par** au moins deux supports de données $(Q_i)$, qui sont disposés à des distances $(L_i)$ différentes de la sortie (4) sur la file d'attente (1) et qui ont respectivement un identifiant $(id_i)$ unique, dans lequel l'équipement de détection (13) est conçu pour calculer, pour chaque support de données $(Q_i)$, à partir de sa distance $(L_i)$ de la sortie (4) et du taux (SR) actuel, un temps d'attente $(WT_i)$ actuel spécifique de l'emplacement du support de données et le mettre à disposition sous son identifiant $(id_i)$ pour la délivrance par le biais d'un réseau radio (9) au dispositif intelligent (8).

3. Dispositif selon la revendication 1 ou 2, **caractérisé en ce que** chaque support de données $(Q_i)$ porte son identifiant $(id_i)$ sous la forme d'un QR-code ou d'un code-barres lisible par caméra.

4. Dispositif selon l'une des revendications 1 à 3, **caractérisé en ce que** chaque identifiant $(id_i)$ contient une adresse internet de l'équipement de calcul (14).

5. Dispositif selon l'une des revendications 1 à 4, **caractérisé en ce qu'**au moins un support de données $(Q_i)$ est attaché sur un support de ruban (6) ou à un poteau de délimitation pour la file d'attente (1).

6. Dispositif selon la revendication 5, **caractérisé en ce qu'**au moins un support de ruban (6), respectivement, un poteau de délimitation, est pourvu d'au moins deux supports de données $(Q_i)$ pointant vers des directions $(R_1, R_2)$ différentes.

7. Dispositif selon l'une des revendications 1 à 6, **caractérisé en ce que** l'équipement de calcul (14) est conçu pour réceptionner par le biais du réseau radio (9) l'identifiant $(id_i)$ lu par machine par un dispositif intelligent (8) et pour envoyer le temps d'attente $(WT_i)$ actuel mis à disposition sous cet identifiant par le biais du réseau radio (9) à ce dispositif intelligent (8) pour la délivrance sur celui-ci.

8. Dispositif selon l'une des revendications 1 à 7, **caractérisé par** un équipement de comptage (16) pour le comptage d'un nombre $(D_i)$ actuel de personnes (2) se trouvant dans la file d'attente (1) par unité de distance, dans lequel l'équipement de calcul (14) est conçu pour utiliser également le nombre $(D_i)$ actuel mesuré pour le calcul des temps d'attente $(WT_i)$ actuels spécifiques de l'emplacement du support de données.

9. Dispositif selon l'une des revendications 1 à 8, **caractérisé en ce que** l'équipement de détection (13) est un tourniquet, un capteur de proximité ou une barrière photoélec-trique.

10. Procédé pour délivrer un temps d'attente actuel dans une file d'attente de personnes qui possède une sortie, comprenant les étapes suivantes dans n'importe quel ordre dans la mesure où elles ne dépendent pas les unes des autres :

la disposition d'au moins un support de données $(Q_i)$ à une distance $(L_i)$ prédéterminée de la sortie (4) sur la file d'attente (1), où le support de données $(Q_i)$ a un identifiant $(id_i)$ unique lisible par machine par un dispositif intelligent (8) d'une personne (2) en attente ;
la détection d'un taux (SR) actuel de personnes (2) quittant la sortie (4) par unité de temps ;
dans un équipement de calcul (14) : le calcul, pour le support de données $(Q_i)$, à partir de sa distance $(L_i)$ de la sortie (4) et du taux (SR) actuel, d'un temps d'attente $(WT_i)$ actuel spécifique de l'emplacement du support de données et la mise à disposition de celui-ci sous son identifiant $(id_i)$ pour la délivrance par le biais d'un réseau radio (9) au dispositif intelligent (8).

11. Procédé selon la revendication 10, comprenant :

la disposition d'au moins deux supports de données $(Q_i)$ à des distances $(L_i)$ différentes de la sortie (4) sur la file d'attente (1), dans lequel chaque support de données $(Q_i)$ a un identifiant $(id_i)$ unique ;
dans l'équipement de calcul (14) : le calcul, pour chaque support de données $(Q_i)$, à partir de sa distance $(L_i)$ de la sortie (4) et du taux (SR) actuel, d'un temps d'attente $(WT_i)$ actuel spécifique de l'emplacement du support de données et la mise à disposition de celui-ci sous son identifiant $(id_i)$ pour la délivrance par le biais d'un réseau radio (9) au dispositif intelligent (8).

**12.** Procédé selon la revendication 10 ou 11, **caractérisé en ce que** chaque support de données ($Q_i$) porte son identifiant ($id_i$) sous la forme d'un QR-code ou d'un code-barres lisible par caméra.

**13.** Procédé selon l'une des revendications 10 à 12, **caractérisé en ce que** chaque identifiant ($id_i$) contient une adresse internet de l'équipement de calcul (14).

**14.** Procédé selon l'une des revendications 10 à 13, comprenant en outre, dans l'équipement de calcul (14) :

la réception, par le biais du réseau radio (9), d'un identifiant ($id_i$) lu par machine par un dispositif intelligent (8) ; et l'envoi du temps d'attente ($WT_i$) actuel mis à disposition sous cet identifiant ($id_i$) par le biais du réseau radio (9) à ce dispositif intelligent (8) pour la délivrance sur celui-ci.

**15.** Procédé selon l'une des revendications 10 à 14, **caractérisé en ce qu'**un nombre ($D_i$) actuel de personnes (2) se trouvant dans la file d'attente (1) par unité de distance est mesuré et utilisé pour le calcul du temps d'attente ($WT_i$) actuel.

*Fig. 1*

*Fig. 2*

*Fig. 3*

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2014350976 A1
- US 2019026565 A1

- EP 2937463 B1